# EUROPÄISCHE PATENTSCHRIFT

(11) **EP 1 270 699 B1**
(45) Veröffentlichungstag und Bekanntmachung des Hinweises auf die Patenterteilung: **17.08.2011**
(21) Anmeldenummer: 02012005.1
(22) Anmeldetag: 31.05.2002
(51) Int. Cl.: C09J 153/00, C08F 293/00, C08F 290/04

(54) **Haftklebemasse insbesondere für unpolare Oberflächen**
Adhesive particularly for unpolar surfaces
Adhésif destiné, en particulier, à des surfaces non polaires

(30) Priorität: 20.06.2001 DE 10129609
(43) Veröffentlichungstag der Anmeldung: 02.01.2003
(73) Patentinhaber: TESA SE, 20253 Hamburg (DE)
(72) Erfinder: Husemann, Marc Dr., 22605 Hamburg (DE); Zöllner, Stephan, Dr., 22043 Hamburg (DE)

(56) Entgegenhaltungen:
- EP-A- 0 921 170
- US-A1- 2001 044 024

## Beschreibung

Die Erfindung betrifft Haftklebemassen auf Basis von Blockcopolymeren, wobei die Blockcopolymere mindestens die Einheit P(A)-P(B)-P(A) aus einem mittleren Polymerblock P(B) sowie aus zwei den mittleren Polymerblock P(B) umschließende Polymerblöcke P(A) oder die Einheit P(B)-P(A)-P(B) aus einem mittleren Polymerblock P(A) sowie aus zwei den mittleren Polymerblock P(A) umschließende Polymerblöcke P(B) enthalten, die Verwendung solcher Haftklebemassen sowie ein Verfahren zu deren Herstellung.

In der Industrie sind Heißschmelzverfahren (Hotmeltverfahren) mit lösungsmittelfreier Beschichtungstechnik zur Herstellung von Haftklebemassen von anwachsender Bedeutung. Allgemein fördern Umweltauflagen und steigende Kosten den Entwicklungsprozeß derartiger Haftklebemassen. Neben SIS-Systemen (Styrol/Isopren/Styrol-Copolymeren) werden zunehmend Acrylat-Polymere aus der Schmelze als Polymerschicht auf Trägermaterialien aufgetragen. Weiterhin werden für spezielle Anwendungen Haftklebebänder mit einem sehr geringen Ausgasungsverhalten benötigt. Dies kann nur durch Hotmeltverfahren gewährleistet werden, da konventionelle Beschichtungen aus der Lösung immer noch geringe Anteile an Restlösemittel enthalten.

Weiterhin steigt der Bedarf für Acrylathaftklebemassen auf unpolaren Oberflächen. In der Industrie wird der Einsatz von Kunststoffen - auf Grund der Gewichtsreduzierung gegenüber konventionellen Metallen - forciert; dementsprechend werden immer mehr Verklebungen auf diesen Substraten vorgenommen. Da Polyacrylate durch die Vielzahl ihrer Estergruppierungen relativ polar sind, lassen sich nur entsprechend polare Harze zur Klebkraftverstärkung einsetzen. Diese weisen zwar eine gute Klebkraft auf polaren Oberflächen wie Stahl auf, bieten aber nur mittelmäßige Klebkräfte auf unpolaren Oberflächen, welche für die meisten Anwendungsgebiete nicht ausreichend sind.

In der US 4,418,120 A werden vernetzte Haftklebemassen mit Kolophonium-Ester-Harzen beschrieben, die eine gute Klebkraft auf Polypropylen besitzen. Durch den ungesättigten Charakter des Harzes weisen diese Haftklebemassen aber eine geringe UV-Stabilität auf. Auch die Klebkräfte auf den unpolaren Oberflächen sind relativ gering. In der US 4,726,982 A sind vernetzte Haftklebemassen mit hoher Klebkraft zu Farben und Lacken beschrieben. Die Copolymerisate aus Acrylestern und N-Vinyl-2-Pyrrolidon werden mit Klebrigmachern wie Poly(isobornylmethacrylat), Pentaerythrolestern der Kolophonium-Harze und gemischten aliphatischen/aromatischen Harzen abgemischt. Auch hier werden relativ polare Harze zur Erhöhung der Klebkraft auf unpolaren Oberflächen eingesetzt. Die zumeist beschriebenen Klebrigmacher besitzen jedoch ungesättigte Verbindungen, die im Hotmelt-Prozess zu Vergelungen führen können, wobei zusätzlich die ungesättigten Verbindungen nach der Verklebung unter UV-Licht altern oder verwittern und sich somit die klebtechnischen Eigenschaften über einen längeren Zeitraum verschlechtern.
In der EP 707 604 A1 werden Polyethylen/Butylen-Makromonomere zur Copolymerisation mit Acrylaten eingesetzt. Hierdurch bilden sich Phasen mit einer geringen Glasübergangstemperatur, die wiederum die Klebemassen auf unpolaren Oberflächen auffließen lassen und somit hohe Klebkräfte auf PE und PP gewährleisten. Nachteilig ist der schlechte Umsatz des beschriebenen Polymerisationsverfahrens. Zudem werden die Makromonomere statistisch copolymerisiert, so daß sich keine Domänen ausbilden können. Solche Domänen böten Bereiche, in denen auch sehr unpolare Harze löslich wären. Daher wird mit diesen Haftklebebändern eine nur relativ geringe Klebkraft auf unpolaren Oberflächen erzielt.
Weiterhin lassen sich die beschriebene Polyacrylate nur sehr schwer als Hotmelt verarbeiten, da die hohen Restmonomeranteile den Aufkonzentrationsprozeß negativ beeinflussen und Migrationen im Haftklebeband die langfristigen klebtechnischen Eigenschaften negativ beeinflussen können.

In der US 20010044024 A werden Haftklebemassen auf Basis von Acrylatcopolymersegmenten und Mercaptankern beschrieben.

Dagegen sind Styrol-lsopren-Styrol-Blockcopolymere (SIS) weit verbreitete Elastomere für Hotmelt-verarbeitbare Haftklebemassen [Herstellverfahren: US 3,468,972 A; US 3,595,941 A; Anwendung in Haftklebemassen: US 3,239,478 A; US 3,935,338 A] mit hoher Klebkraft auf unpolaren Oberflächen. Die gute Verarbeitbarkeit wird durch ein geringeres Molekulargewicht und durch eine spezielle Morphologie erreicht [EP 0 451 920 B1]. Diese Haftklebemassen sind sehr gut mit UV-Licht unter Anwesenheit von Photoinitiatoren oder mit Elektronenstrahlung vernetzbar, da die Mittelblöcke eine Vielzahl von Doppelbindungen enthalten.
Dennoch besitzen diese Elastomere Nachteile, wie beispielsweise eine starke Alterung unter UV-Licht (also auch im Tageslicht) und in einer Sauerstoff/Ozon-haltigen Atmosphäre. Zudem wird durch die Hart-Block-Domänenbildung aus den harten Polystyrolendblöcken ein gutes Auffließen auf unpolaren Oberflächen verhindert. Dasselbe gilt auch für andere Blockcopolymere, die einen zumindest eine Doppelbindung enthaltenden Mittelblock besitzen [US 5,851,664 A].
Eine weitere für die Anwendung sehr ungünstige Eigenschaft von Styrol-Isopren-Styrol-Blockcopolymeren ist die relativ geringe Wärmescherfestigkeit. Diese Haftklebemassen sind daher für Anwendungen in höheren Temperaturbereichen nicht geeignet.

In der US 5,314,962 A werden A-B-A-Blockcopolymere als Elastomere für Klebemassen beschrieben, die als kohäsionsbildendes Kriterium die A-Domänenbildung besitzen. Durch die Auswahl der verwendeten Comonomere lassen sich aber auf unpolaren Oberflächen nur geringe Klebkräfte realisieren. Zudem sind diese Polymere nicht mit sehr unpolaren Harzen verträglich.

In der EP 0 921 170 A1 werden Haftklebemassen auf Basis von A-B-A Acrylatblockcopolymer mit C1-C18 Alkylrest beschrieben, die mit Harzzusätzen modifiziert wurden. Auch hier sind - bedingt durch die Auswahl der Comonomere und zugesetzten Harze - nur geringe Klebkräfte auf unpolaren Oberflächen zu realisieren.

In der EP 0 408 429 A1 und EP 0 408 420 A1 sind A-B-A-Blockcopolymere beschrieben, die über lebende anionische Polymerisation synthetisiert wurden. Diese Polymere sind aber auf Grund des fehlenden Acrylsäureanteils als Haftklebemassen nicht geeignet, da die innere Kohäsion des Mittelblocks zu gering ist und für Verklebungen auf Stahl ein zumindest geringer Anteil polarer Monomere benötigt wird. Durch die anionische Polymerisation können als Comonomere nicht Acrylsäure oder andere hydroxygruppenfunktionalisierte Acrylate, wie z.B. Hydroxyethylacrylat, eingesetzt werden. Zudem wird wiederum durch den Einsatz der konventionellen Domänenbildenden Polymeren, wie z.B. PMMA oder Polystyrol, ein sehr effizientes Auffließen auf unpolaren Oberflächen verhindert.

In der US 5,166,274 A werden zur Kompensierung dieses Acrylsäuremangels Blockcopolymere aus tert.-Butylmethacrylat zur Freisetzung der Carbonsäurefunktion hydrolysiert. Diese Methode läßt sich aber im großtechnischen Maßstab nicht auf Haftklebemassen anwenden, weil der Hydrolyse-Schritt sehr zeit- und kostenaufwendig ist.

In der US 6,069,205 A werden Di- und Triblock-Copolymere beschrieben, welche über eine Atom-Transfer Polymerisation hergestellt und für Klebemassen genutzt werden. Auch diese Methode ist zur Herstellung von Haftklebemassen nicht geeignet, da Schwermetallverbindungen in relativ hohen katalytischen Mengen eingesetzt werden, die aufwendig über Extraktionsprozesse entfernt werden müßten.

In der EP 1 008 640 A1 werden Styrol-Blockcoplymere beschrieben, die einen Acrylatmittelblock aufweisen, der sich aber aus den gängigen C₂- bis C₁₄-Alkylacrylaten zusammensetzt. Durch die Beschränkung der Comonomere und damit verbunden die der einsetzbaren Harze lassen sich mit diesen Polymeren nur geringe Klebkräfte auf unpolaren Substraten erzielen. Zudem werden auch zur Herstellung dieser Polymere Metallsalze eingesetzt (in Analogie zur US 6,069,205 A), die für Haftklebebandanwendungen aufwendig entfernt werden müssen.

Aufgabe der Erfindung ist es daher, verbesserte Haftklebemassen auf Polyacrylatbasis zur Verfügung zu stellen, welche die Nachteile des Standes der Technik nicht oder nur in verminderter Weise aufweisen.

Überraschend und für den Fachmann nicht vorhersehbar wird die Aufgabe gelöst durch die erfinderischen Haftklebemassen, wie sie in den Ansprüchen näher ausgeführt werden. Insbesondere betreffen die Hauptansprüche Haftklebemassen, welche ein gegenüber SIS-Massen verbessertes Alterungsverhalten, eine gegenüber den konventionellen, zum Stand der Technik gehörigen A-B-A-Polyacrylathaftklebemassen höhere Klebkraft auf unpolaren Oberflächen sowie eine exzellente Verträglichkeit mit sehr unpolaren Harzen aufweisen.

Dementsprechend betrifft die Erfindung eine Haftklebemasse auf Basis von Blockcopolymeren, wobei die Blockcopolymere mindestens eine Einheit aus drei aufeinanderfolgenden Polymerblöcken aufweisen, bei denen die drei aufeinanderfolgenden Polymerblöcke in abwechselnder Folge aus der Gruppe der Polymerblöcke P(A) und P(B) gewählt werden, und wobei
- P(A) einen Homo- oder Copolymerblock repräsentiert, erhältlich aus einer Komponente A, welche aus zumindest einem Monomeren A1 besteht,
- das zumindest eine Monomer A1 ein acryliertes Makromonomer entsprechend der allgemeinen Formel

   CH₂=C(R^{I})(COOR^{II}) (I)

   darstellt, wobei R' = H oder CH₃ und R^{II} ein aliphatischer linearer, verzweigter oder cyclischer, unsubstituierter oder substituierter, gesättigter oder ungesättigter Alkylrest mit mehr als 30 Kohlenstoffatomen ist, und wobei das mittlere Molekulargewicht M_{N} des zumindest einen Makromonomers zwischen 492 g/mol und 30.000 g/mol liegt,
- P(B) einen Homo- oder Copolymerblock repräsentiert, erhältlich aus einer Komponente B, welche aus zumindest einem Monomer B1 besteht, wobei der Polymerblock P(B) eine Erweichungstemperatur von - 80 °C bis + 20 °C aufweist,
- die Polymerblöcke P(A) nicht homogen mischbar mit den Polymerblöcken P(B) sind.

Die Blockcopolymere der erfinderischen Haftklebemasse enthalten also mindestens die Einheit P(A)-P(B)-P(A) aus einem mittleren Polymerblock P(B) sowie aus zwei den mittleren Polymerblock P(B) umschließende Polymerblöcke P(A) und/oder die hierzu inverse Struktureinheit, also mindestens die Einheit P(B)-P(A)-P(B) aus einem mittleren Polymerblock P(A) sowie aus zwei den mittleren Polymerblock P(A) umschließende Polymerblöcke P(B) mit der vorstehend beschriebenen Maßgabe für die Polymerblöcke P(A) und P(B).

Die Blockcocpolymere für die erfindungsgemäße Haftklebemasse lassen sich in unterschiedlichsten Strukturen herstellen und vorteilhaft einsetzen. So sei explizit verwiesen auf gerade oder verzweigte Ketten aus den Polymerblöcken P(A) und P(B), beispielsweise entsprechend einer allgemeinen Struktur [P(A)-P(B)]ₙ, auf Sternpolymere aus P(A) und P(B), beispielsweise entsprechend der allgemeinen Strukturen [[P(A)-P(B)]ₙ]ₘX oder [[P(B)-P(A)]ₙ]ₘX oder [[P(A)-P(B)]ₙ]ₘX[P(A)-P(B)]ₚ]_{q}, oder der allgemeinen Strukturen [[P(A)-P(B)]ₙ]ₘXLₚ oder [[P(B)-P(A)]ₙ]ₘXLₚ, wobei L hier unterschiedliche Reste darstellen können. Die Aufzählung dieser Strukturen soll nur beispielhaft sein und keine Beschränkung darstellen. Dabei seien auch alle "unsymmetrischen" Strukturen eingeschlossen, bei denen alle der auftretenden Polymerblöcke P(A) und P(B) für sich die obengenannten Definitionen erfüllen, die Indizes n, m p und q aber lediglich das multiple Auftreten der einzelnen Einheiten, nicht aber deren chemische oder strukturelle Identität bedingen. L können bevorzugt Reste sein, welche beispielsweise Poly(meth)acrylate darstellen, welche aber in sich keine Blockstruktur aufweisen. Hierzu zählen insbesondere auch Homopolymere aus den Komponenten A oder B.

In einer im erfinderischen Sinne günstigen Vorgehensweise werden als Makromonomere A1 hydrierte Ethylen/Propylen- und/oder hydrierte Ethylen/Butylen-Makromonomere eingesetzt, welche eine Glasübergangstemperatur von nicht mehr als 0 °C besitzen und als Endgruppe eine Acrylat- oder Methacrylatgruppe tragen.

Als ein sehr bevorzugtes Beispiel wird Kraton L-1253™ (Shell AG) eingesetzt. Kraton Liquid L-1253™ (Shell AG) ist ein Makromonomer mit einem Molekulargewicht von 4000 g/mol, Methacrylat-funktionalisiert und besitzt als aliphatische Seitenkette eine gesättigte Poly(ethylen/butylen)-Einheit.

In einer im erfinderischen Sinne sehr günstigen Vorgehensweise werden als Makromonomere aliphatische Acrylsäureester, wie z.B. Acrylsäuretriacontanylester, eingesetzt sowie höhere Homologe.

Zur Erzielung einer guten Nichtmischbarkeit der Polymerblöcke P(A) und der Polymerblöcke P(B) ist es von Vorteil, die Polarität dieser Blöcke stark unterschiedlich zu gestalten und damit eine optimale Phasenbildung zu gewährleisten. Es ist daher von Vorteil, bevorzugt unpolare Monomere als weitere Monomere der Komponente A zur Synthese der Polymerblöcke P(A) wählen.

Zur besseren Phasentrennung können noch Monomere mit einer hohen Glasübergangstemperatur für die Polymerblöcke P(A) mit copolymerisiert werden. Vorteilhafte Beispiele, welche als Comonomere für die Komponente A1 eingesetzt werden, sind Vinylaromaten, Methylmethacrylate, Cyclohexylmethacrylate, Isobornylmethacrylate. Besonders bevorzugte Beispiele sind Methylmethacrylat und Styrol.

Weiterhin lassen sich als Komponente A Mischungen der bereits geschilderten Makromonomere mit den im folgenden dargestellten Monomeren, welche zur Ausbildung der Polymerblöcke P(B) eingesetzt werden, verwenden, sofern die Mischungsverhältnisse derart gewählt werden, daß die Phasentrennung der Polymerblöcke P(A) und P(B) gewährleistet bleibt.

Bei einer günstigen Weiterentwicklung der erfindungsgemäßen Haftklebemasse setzt sich die Komponente B zumindest teilweise aus Monomeren zusammen, welche aus den folgenden Gruppen gewählt werden:
(c) Acrylsäure- und Methacrylsäure-Derivate nach der allgemeinen Formel

   CH₂ = C(R^{III})(COOR^{IV}) (II)

   wobei R^{III} = H oder CH₃ ist und R^{IV} eine lineare oder verzweigte aliphatische Alkylkette mit 2 bis 20, bevorzugt mit 4 bis 14, insbesondere mit 4 bis 9 Kohlenstoffatomen darstellt,
(d) Vinylverbindungen; insbesondere solche, welche eine oder mehrere funktionelle Gruppen aufweisen, die zur Vernetzung befähigt sind,
wobei sich die Komponente B insbesondere zusammensetzt aus 60 bis 100 Gew.-% Verbindungen aus der Gruppe (a) und 0 bis 40 Gew.-% Verbindungen aus der Gruppe (b).

In einer vorteilhaften Variante der erfindungsgemäßen Haftklebemasse lassen sich im Sinne der Gruppe (a) Acrylmonomere entsprechend der allgemeinen Formel (II) einsetzen, bei denen die Gruppe -OR^{IV} eine funktionelle Gruppe zur Vernetzung der Haftklebemasse darstellt oder beinhaltet.

Bevorzugte Beispiele für Monomere im Sinne der Gruppe (a) sind n-Butylacrylat, n-Pentylacrylat, n-Hexylacrylate, n-Heptylacrylat, n-Octylacrylat, n-Nonylacrylat und deren verzweigten Isomere, wie beispielsweise 2-Ethylhexylacrylat. Weiterhin gehören die zu den oben angeführten Acrylaten entsprechenden Methacrylate zu den bevorzugten Beispielen für die Monomere der Gruppe (a). Verbindungen, welche sich hervorragend als Monomere der Gruppe (a) einsetzen lassen, sind zudem Isobutylacrylat, Isooctylacrylat und Isobornylacrylat.

Als Vinylverbindung im Sinne der Monomere der Gruppe (b) werden hier alle Monomere bezeichnet, welche eine zur Polymerisation befähigte vinyloge Doppelbindung aufweisen, insbesondere solche, bei denen diese Doppelbindung durch funktionelle Gruppen für die Polymerisation aktiviert wird. In diesem Sinne lassen sich auch (Meth-)Acrylate in die Gruppe der Vinylmonomere einordnen.

Im Sinne der Gruppe (b) werden in bevorzugter Weise solche Monomere verwendet, welche die Glasübergangstemperatur des Polymerblocks P(B) - allein oder in Kombination mit weiteren Monomeren, insbesondere solchen aus den Gruppen (a) oder (b), auf unterhalb 20 °C herabsetzen.

In einer sehr vorteilhaften Ausführungsform der Erfindung wird zumindest eines der Monomere der Komponente B, insbesondere zumindest eines der Monomere der Gruppe (b), derart gewählt, daß es eine oder mehrere funktionelle Gruppen aufweist, welche zu einer Vernetzungsreaktion für der Blockcopolymere genutzt werden können, besonders zu einer thermischen oder strahlenchemischen Vernetzung, ganz besonders zu einer Vernetzung, welche durch UV-Strahlen oder durch Bestrahlung mit Elektronenstrahlen hervorgerufen und/oder unterstützt wird.

Dies können in besonders günstiger Weise (Meth-)Acrylderivate mit ungesättigten Alkylresten im Rest R^{VI} der allgemeinen Formel

CH₂=C(R^{V})(COOR^{VI}) (III)

sein, wobei R^{V} = H oder CH₃ ist. Bevorzugt für R^{VI} sind dabei Alkylreste mit 3 bis 14 Kohlenstoffatomen, welche mindestens eine C-C-Doppelbindung aufweisen. Für mit Doppelbindungen modifizierte Acrylate eignen sich besonders vorteilhaft Allylacrylat und acrylierte Zimtsäureester.

Weiterhin lassen sich hier ebenfalls sehr bevorzugt Acrylmonomere entsprechend der allgemeinen Formel (III) einsetzen, bei denen die Gruppe -OR^{VI} eine andere funktionelle Gruppe zur Vernetzung der Haftklebemasse darstellt oder eine oder mehrere weitere und/oder andere funktionelle Gruppen zur Vernetzung der Haftklebemasse beinhaltet.

Weiterhin lassen sich sehr vorteilhaft als Monomere der Gruppe (b) auch Vinylverbindungen mit weiteren, während der (radikalischen) Polymerisation nicht reagierenden Doppelbindungen einsetzen. Besonders bevorzugte Beispiele sind Isopren und Butadien.

Bevorzugte Beispiele für Monomere der Gruppe (b) sind weiterhin Vinylacetat, Acrylamide, mit zumindest einer Doppelbindung funktionalisierte Fotoinitiatoren, Tetrahydrofurylacrylat, hydroxyfunktionalisierte (Meth-)Acrylate, carbonsäurefunktionalisierte (Meth-)Acrylate, amin- oder amidfunktionalisierte (Meth-)Acrylate, weiterhin Vinylester, Vinylether, Vinylhalogenide, Vinylidenhalogenide, Vinylverbindungen mit ariomatischen Cyclen und Heterocyclen in α-Stellung, insbesondere Vinylacetat, Vinylformamid, Vinylpyridin, Ethylvinylether, Vinylchlorid, Vinylidenchlorid, Acrylonitril.
Eingesetzt werden im Sinne der Monomere der Gruppe (b) können weiterhin vorteilhaft Hydroxyethylacrylat, Hydroxypropylacrylat, Hydroxyethylmethacrylat, Hydroxypropylethacrylat, Acrylsäure, Methacrylsäure, Allylalkohol, Maleinsäureanhydrid, Itaconsäureanhydrid, Itaconsäure, Benzoinacrylat, acryliertes Benzophenon, Acrylamid und Glyceridylmethacrylat.

In einer weiteren sehr günstigen Ausführungsform der erfinderischen Haftklebemasse sind solche zur Vernetzung befähigten funktionellen Gruppen eingeführt, welche durch den Einfluß thermischer Energie zu einer Vernetzungsreaktion befähigt sind. Sehr bevorzugt sind hier Hydroxy-, Carboxy-, Epoxy-, Säureamid-, Isocyanato- oder Aminogruppen

Zur Herstellung der für die erfindungsgemäßen Haftklebemassen eingesetzten Blockcopolymere können prinzipiell alle kontrolliert radikalisch verlaufenden Polymerisationen eingesetzt werden, wie z.B. die GTRP (Group-Transfer Radical Polymerization), die ATRP (Atom-Transfer Radical Polymerization), die Nitroxid/TEMPO kontrollierte Polymerisation oder sehr bevorzugt der RAFT-Prozess (Rapid Addition-Fragmentation Chain Transfer) bzw. ein abgewandelter RAFT-Prozess.

Alternativ können auch die Polymere über eine lebende anionische Polymerisation sequentiell oder über einen difunktionellen Initiator hergestellt werden. Vorraussetzung ist hier, daß als Monomere keine Verbindungen eingesetzt werden, die die anionische Polymerisation ab- oder unterbrechen könnten.

Die Polymerisation kann in Gegenwart eines organischen Lösungsmittels oder in Gegenwart von Wasser oder in Gemischen aus organischen Lösungsmitteln und/oder Wasser oder in Substanz durchgeführt werden. Bevorzugt wird so wenig Lösungsmittel wie möglich eingesetzt. Die Polymerisationszeit beträgt - je nach Umsatz, Temperatur und Methode - zwischen 6 und 72 h.

Bei der Lösungsmittelpolymerisation werden als Lösemittel vorzugsweise Ester gesättigter Carbonsäuren (wie Ethylacetat), aliphatische Kohlenwasserstoffe (wie n-Hexan oder n-Heptan), Ketone (wie Aceton oder Methylethylketon), aromatische Lösungsmittel (wie Toluol oder Xylol), Siedegrenzenbenzin oder Gemische dieser Lösungsmittel verwendet. Zur Polymerisation der sehr unpolaren Makromonomere für Polymerblock P(A) werden sehr bevorzugt unpolare Lösemittel, wie aliphatische Kohlenwasserstoffe oder Siedegrenzenbenzine eingesetzt. Für die Polymerisation in wäßrigen Medien bzw. Gemischen aus organischen und wäßrigen Lösungsmitteln werden zur Polymerisation bevorzugt Emulgatoren und Stabilisatoren zugesetzt. Als Polymerisationsinitiatoren werden übliche radikalbildende Verbindungen wie beispielsweise Peroxide, Azoverbindungen und Peroxosulfate eingesetzt. Auch Initiatorgemische eignen sich hervorragend.

Falls die Polymere über eine TEMPO- oder Nitroxidgesteuerte kontrollierte radikalische Polymerisation hergestellt werden, werden zur Radikalstabilisierung Nitroxide des Typs (IVa) oder (IVb) eingesetzt: 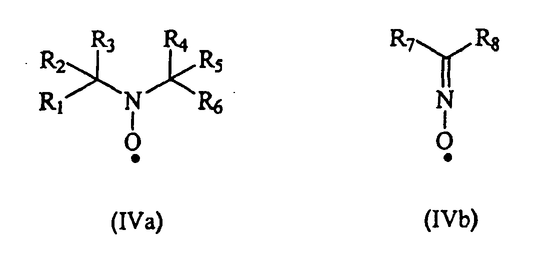 wobei R₁, R₂, R₃, R₄, R₅, R₆, R₇, R₈ unabhängig voneinander folgende Verbindungen oder Atome bedeuten:
i) Halogenide, wie z.B. Chlor, Brom oder lod
ii) lineare, verzweigte, cyclische und heterocyclische Kohlenwasserstoffe mit 1 bis 20 Kohlenstoffatomen, welche gesättigt, ungesättigt und aromatisch sein können,
iii) Ester -COOR₉, Alkoxide -OR₁₀ und/oder Phosphonate -PO(OR₁₁)₂,
wobei R₉, R₁₀ oder R₁₁ für Reste aus der Gruppe ii) stehen.

Die Verbindungen (IVa) oder (IVb) können auch an Polymerketten jeglicher Art gebunden sein und somit zum Aufbau der Blockcopolymere als Makroradikale oder Makroregler genutzt werden.

Mehr bevorzugt werden kontrollierte Regler für die Polymerisation Verbindungen des Typs:
- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxy pyrrolidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-t-Butylnitroxid
- Diphenylnitroxid
- T-Butyl-t-amyl Nitroxid

Als weitere kontrollierte Polymerisationsmethode kann die Atom Transfer Radical Polymerization ATRP eingesetzt werden, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Cu-, Ag- oder Au-Komplexe [EP 0 824 111 A1; EP 0 826 698 A1; EP 0 824 110 A1; EP 0 841 346 A1; EP 0 850 957 A1] eingesetzt werden. Die unterschiedlichen Möglichkeiten der ATRP sind ferner in den Schriften US 5,945,491 A, US 5,854,364 A und US 5,789,487 A beschrieben.

Weiterhin kann das Blockcopolymer über eine anionische Polymerisation hergestellt werden. Hier werden als Reaktionsmedium bevorzugt inerte Lösungsmittel verwendet, wie z.B. aliphatische und cycloaliphatische Kohlenwasserstoffe, oder auch aromatische Kohlenwasserstoffe.

Das lebende Polymer wird im allgemeinen durch die Struktur P(B)-M repräsentiert, wobei M ein Metall der Gruppe I des Periodensystems ist, wie z.B. Lithium, Natrium oder Kalium. Das Molekulargewicht des Polymers wird durch das Verhältnis von Initiator zu Monomer vorgegeben. Zum Aufbau der Blockstruktur werden dann die Monomere für Block P(A) hinzugegeben, um dann anschließend wiederum durch Zugabe des (der) Monomer(e) für Block P(B) den Polymerblock P(B)-P(A)-P(B) herzustellen. Alternativ kann P(B)-P(A)-M durch eine geeignete difunktionelle Verbindung gekuppelt werden. Auf diesem Weg sind auch Sternblockcopolymere [P(B)-P(A)]ₙX zugänglich. Als geeignete Polymerisationsinitiatoren eignen sich z.B. n-Propyllithium, n-Butyllithium, 2-Naphthyllithium, Cyclohexyllithium oder Octyllithium, ohne sich durch diese Aufzählung unnötig beschränken zu wollen.
Weiterhin lassen sich auch difunktionelle Initiatoren einsetzen, wie z.B. 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind beispielsweise Lithiumhalogenide, Alkalimetallalkoxide oder Alkylaluminium-Verbindungen. Diese Polymerisationsverfahren ist auch als Ligated Anionic Polymerisation bekannt.

Als sehr bevorzugte Variante wird zur Herstellung ein abgewandelter RAFT-Prozeß (reversible addition-fragmentation chain transfer) durchgeführt. Der RAFT-Prozeß ist in den Schriften WO 98/01478 A1 und WO 99/31144 A1 ausführlich beschrieben, wenn auch durch die beschriebene Reaktionsführung keine für Haftklebemassen geeignete Materialen hergestellt werden konnten. Zur Herstellung der für die erfindungsgemäßen Haftklebemassen eingesetzten Blockcopolymere eignen sich besonders vorteilhaft Trithiocarbonate [Macromolecules 2000, 33, 243-245), wobei in einem ersten Schritt Monomere für die Endblöcke polymerisiert werden und in einem zweiten Schritt der Mittelblock polymerisiert wird. Nach der Polymerisation der Endblöcke kann die Reaktion abgebrochen und reinitiiert werden. Durch Mehrfach-Initiierung wird - im Gegensatz zum ursprünglichen RAFT-Prozess - ein guter Umsatz erreicht, so daß sich die hergestellten Blockcopolymere auch als Acrlyathaftklebemassen einsetzen lassen. Ferner kann auch ohne Reaktionsunterbrechung sequentiell polymerisiert werden. In einer sehr vorteilhaften Variante wird das Trithiocarbonat (V) zur Polymerisation, insbesondere von Acrylaten, eingesetzt:

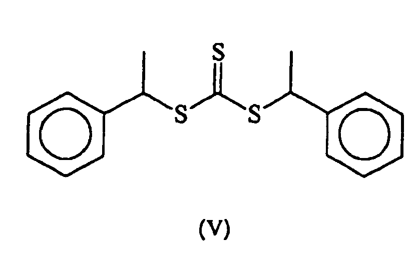

Zur Polymerisation von Methacrylaten eignen sich mehr Trithiocarbonate des Typs (VI) und (VII). 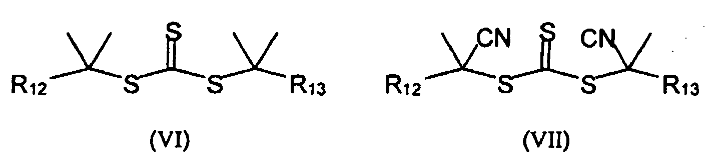 wobei R₁₂ und R₁₃ gleich oder verschieden sein können und H, Methyl, Halogenide wie z.B. Chlor, Brom oder lod, lineare, verzweigte, cyclische und heterocyclische Kohlenwasserstoffe mit 2 bis 20 Kohlenstoffatomen, welche gesättigt, ungesättigt und aromatisch sein können, Ester -COOR, Alkoxide -OR und Heterocyclen mit bis zu 20 C-Atomen umfassen.

Das für die erfindungsgemäßen Haftklebemasssen eingesetzte Blockcopolymer wird konventionell aus Lösung oder aus der Schmelze weiterverarbeitet. Für die Verarbeitung aus der Schmelze wird das Blockcopolymer vom Lösemittel in einem Aufkonzentrationsextruder unter vermindertem Druck entfernt, wobei beispielsweise Einoder Doppelschneckenextruder eingesetzt werden können. Doppelschneckenextruder können vorteilhaft gleich- oder gegenläufig betrieben werden.

Für die erfinderische Haftklebemasse ist es von Vorteil, wenn die Blockcopolymere ein mittleres Molekulargewicht Mₙ (Zahlenmittel) zwischen 5.000 und 600.000 g/mol, insbesondere zwischen 80.000 und 450.000 g/mol aufweisen.

Der Anteil der Polymerblöcke P(B) liegt bevorzugt zwischen 10 und 60 Gew.-%, insbesondere zwischen 15 und 40 Gew.-% des gesamten Blockcopolymers.

Zur vorteilhaften Weiterentwicklung der erfinderischen Haftklebemasse werden dieser bis zu 50 Gew.-%, insbesondere 20 bis 40 Gew.-%, Harze zugesetzt. Als Harze sind beispielsweise Terpen-, Terpenphenolharze, C₅- und C₉-Kohlenwasserstoffharze, Pinen-, Inden- und Kolophoniumharze allein und auch in Kombination miteinander einsetzbar. Prinzipiell lassen sich aber alle in dem entsprechenden Polymer löslichen Harze verwenden, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze.
Für eine sehr bevorzugte Weiterentwicklung werden dem Blockcopolymer sehr unpolare hydrierte oder teilhydrierte Kohlenwasserstoffharze beigemischt, die sich bevorzugt in den P(A)-Domänen aufhalten. Als kommerziell erhältlliches Harz sei hier Regalite R 91™ der Fa. Hercules genannt.
Weiterhin kann es vorteilhaft sein, unabhängig von der Harzbeimischung weitere Additive, insbesondere Compoundierungsmittel, Alterungsschutzmittel, Lichtschutzmittel, Ozonschutzmittel, Fettsäuren, Weichmacher, Blähmittel, Beschleuniger und/oder Füllmittel (beispielsweise Ruß, TiO₂, Voll- oder Hohlkugeln aus Glas oder anderen Materialien, Keimbildner), zuzugeben.
Des weiteren werden dem Blockcopolymer optional verträgliche Vernetzersubstanzen hinzugegeben.
Als Vernetzer eignen sich z.B. Metallchelate, multifunktionelle Isocyanate, multifunktionelle Amine oder multifunktionelle Alkohole. Auch multifunktionelle Acrylate lassen sich vorteilhaft als Vernetzer für die actinische Bestrahlung verwenden.
Alternativ werden den Blockcopolymeren UV-Photoinitiatoren zugesetzt. Nützliche Photoinitiatoren, welche sehr gut zu verwenden sind, sind Benzoinether, wie z.B. Benzoinmethylether und Benzoinisopropylether, substituierte Acetophenone, wie z.B. 2,2-Diethoxyacetophenon (erhältlich als Irgacure 651 von Fa. Ciba Geigy), 2,2-Dimethoxy-2-phenyl-1-phenylethanon, Dimethoxyhydroxyacetophenon, substituierte alpha-Ketole, wie z.B. 2-Methoxy-2-hydroxy propiophenon, aromatische Sulfonylchloride, wie z.B. 2-Naphthyl sulfonylchlorid, und photoaktive Oxime, wie z.B. 1-Phenyl-1,2 propandion-2-(O-ethoxycarbonyl)oxim. Weiterhin können die für die erfindungsgemäßen Haftklebemassen eingesetzten Polymere direkt ohne UV-Photoinitiatorzusatz UV-vernetzt werden, wenn Photoinitiatoren im Polymer copolymerisiert wurden. Allgemein unterstützen Coinitiatoren oder Beschleuniger die Vernetzung. Es können alle dem Fachmann bekannten UV-Vernetzungs- beschleunigenden Substanzen eingesetzt werden.

Eine Weiterentwicklung, die das Verfahren zur Herstellung der erfindungsgemäßen Haftklebemassen besonders günstig für die Produktion von beispielsweise Klebebändern macht, zeichnet sich dadurch aus, daß die abgemischte Haftklebemasse aus Lösung oder aus der Schmelze heraus weiterverarbeitet wird und das sie insbesondere auf einen Träger aufgetragen wird.

Als Trägermaterial, beispielsweise für Klebebänder, lassen sich hierbei die dem Fachmann geläufigen und üblichen Materialien, wie Folien (Polyester, PET, PE, PP, BOPP, PVC), Vliese, Schäume, Gewebe und Gewebefolien sowie Trennpapier (Glassine, HDPE, LDPE) verwenden. Diese Aufzählung soll nicht abschließend sein.

Im Falle einer Vernetzung der Haftklebemasse wird diese bevorzugt mit actinischer Bestrahlung behandelt. Die Vernetzung der erfindungsgemäßen Schmelzhaftklebemassen erfolgt durch kurzzeitige UV-Bestrahlung im Bereich von 200 bis 400 nm mit handelsüblichen Quecksilber-Hochdruck oder Mitteldrucklampen mit einer Leistung von z.B. 80 bis 200 W/cm oder durch thermische Vernetzung in einem Temperaturbereich zwischen 70 und 140 °C oder durch ionisierende Strahlung, wie z.B. durch Elektronenstrahlhärtung. Für die UV-Vernetzung kann es angebracht sein, die Strahlerleistung der Bahngeschwindigkeit anzupassen oder die Bahn bei Langsamfahrt teilweise abzuschatten, um ihre thermische Belastung zu verringern. Die Bestrahlungszeit richtet sich nach Bauart und Leistung der jeweiligen Strahler.

Weiterhin betrifft die Erfindung die Verwendung einer wie im vorstehenden beschriebenen Haftklebemasse für ein ein- oder doppelseitig mit der Haftklebemasse ausgerüstetes Klebeband, insbesondere für ein Klebeband für Verklebungen auf unpolaren Oberflächen, wobei das Klebeband bevorzugt derart hergestellt ist, daß die Haftklebemasse aus der Schmelze heraus auf einen Träger aufgetragen wird.

Schließlich ist Inhalt der Erfindung auch ein Verfahren zur Herstellung einer Haftklebemasse, wie sie im vorstehenden dargelegt ist, wobei die Darstellung des Blockcopolymers durch eine Thioester- oder eine Thiocarbonat-kontrollierte radikalische Polymerisation.

### Beispiele

Die Erfindung soll im folgenden durch einige Beispiele näher erläutert werden, ohne sich hierdurch unnötig beschränken zu wollen.

| Eingesetzte kommerziell erhältliche Chemikalien | | |
|---|---|---|
| **Substanz** | **Hersteller** | **Chemische Zusammensetzung** |
| Vazo 67 | DuPont | 2,2'-Azo-bis(2-ethylpropionsäurenitril) |
| Regalite R91 | Hercules | vollhydriertes Kohlenwasserstoffharz, Mₙ = 500 g/mol, Polydispersität 1,4 Erweichungsbereich 85 - 91 °C |

### Testmethoden

### Scherfestigkeit (Text TA)

Ein 13 mm breiter Streifen des Klebebandes wurde auf eine glatte und gereinigte Stahloberfläche aufgebracht. Die Auftragsfläche betrug 20 mm × 13 mm (Länge × Breite). Anschließend wurde bei Raumtemperatur ein 1 kg-Gewicht an dem Klebeband befestigt und die Zeit bis zum Abfallen des Gewichtes gemessen.
Die gemessenen Scherstandzeiten sind jeweils in Minuten angegeben und entsprechen dem Mittelwert aus drei Messungen.

### 180° Klebkrafttest (Test TB1, TB2)

Ein 20 mm breiter Streifen einer auf einer Polyester als Schicht aufgetragenen Acrylathaftklebemasse wurde auf PE-Platten (TB1) oder PP-Platten (TB2) aufgebracht. Der Haftklebestreifen wurde zweimal mit einem 2 kg Gewicht auf das Substrat aufgedrückt. Das Klebeband wurde anschließend sofort mit 300 mm/min und im 180°-Winkel vom Substrat abgezogen. Alle Messungen wurden bei Raumtemperatur unter klimatisierten Bedingungen durchgeführt.
Die Messergebnisse sind in N/cm angegeben und sind gemittelt aus drei Messungen.

### Herstellung des Trithiocarbonats:

Als Regler wurde folgendes Trithiocarbonat (IV) gemäß Macromolecules 2000, 33, 243-245 und Synth. Commun. 1988, 18, 1531-1536 hergestellt.

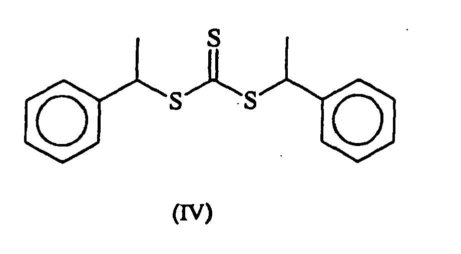

### Durchführung der Polymerisationen

### Beispiel 1:

In einem 1000 ml Polymerisationsreaktor, ausgestattet mit einem Heizbad, einem Rückflußkühler, einem Stickstoffeinleitungsrohr und einem Ankerrührer, wurden 400 g Acrylsäuretriacontanylester, 133 g Siedegrenzenbenzin 60/95, 0,12 g Vazo 67™ (Fa. DuPont), 15 g Aceton und 2,00 g des Trithiocarbonates (IV) eingefüllt. Der Reaktor wurde dreimal entgast und dann unter Stickstoffatmosphäre die Polymerisation durchgeführt. Zur Initiierung wurde auf 75 °C hochgeheizt und unter Rühren 4 h polymerisiert. Dann wurde mit 0,12 g Vazo 67™ (Fa. DuPont) nachinitiiert. Die Polymerisation wurde nach 48 h abgebrochen, zur Isolierung auf RT abgekühlt. Anschließend wurde das Polymer in einen 4 L Polymerisationsreaktor für konventionelle radikalische Polymerisationen umgefüllt und das Polymerisat mit 330 g Butylacrylat, 20 g Acrylsäure 50 g Methylacrylat, 100 g Aceton sowie 200 g Siedegrenzenbenzin verdünnt. Nach 20 Minuten Durchleiten von Stickstoffgas und zweimaligen Entgasen wurde der Reaktor unter Rühren auf 80 °C hochgeheizt. Bei einer Produkttemperatur von 60 °C werden 0,12 g Vazo 67™ (Fa. DuPont) hinzugegeben. Nach 2 h wurde mit 0,12 g Vazo 67™ nachinitiiert, nach 4 h mit 200 g Siedegrenzenbenzin und 50 g Aceton verdünnt und mit 0.2 g Vazo 67™ nachinitiiert und nach 24 h die Polymerisation abgebrochen.
Zur Isolierung wurde auf RT abgekühlt, das Blockcopolymer auf 40 % durch Aceton/Siedegrenzenbenzin (1:2) verdünnt und dann mit 20 Gewichtsanteilen Regalite R91™ (Fa. Hercules) bezogen auf den Polymeranteil abgemischt. Das Acrylatblockcopolymer wird in einem Vakuum/Trockenschrank vom Lösungsmittelgemisch befreit und anschließend aus der Schmelze über eine Breitschlitzdüse auf eine mit Saran geprimerten 23 µm dicken PET-Träger mit 50 g/m² Masseauftrag beschichtet, mit 50 kGy bei einer Beschleunigungsspannung von 200 kV mit Elektronen bestrahlt (ES-Anlage der Fa. Crosslinking). Anschließend wurde nach den Testmethoden TA, TB1 und TB2 ausgetestet.

### Beispiel 2:

Es wurde analog Beispiel 1 vorgegangen. Das Acrylatblockcopolymer wurde mit 30 Gewichtsanteilen Regalite R91™ (Fa. Hercules) bezogen auf den Polymeranteil abgemischt. Nach der Beschichtung aus der Schmelze wurde nach den Testmethoden TA, TB1 und TB2 ausgetestet.

### Beispiel 3:

In einem 1000 ml Polymerisationsreaktor, ausgestattet mit einem Heizbad, einem Rückflußkühler, einem Stickstoffeinleitungsrohr und einem Ankerrührer, wurden 360 g Acrylsäuretriacontanylester, 40 g Isobornylmethacrylat, 133 g Siedegrenzenbenzin 60/95, 0,12 g Vazo 67™ (Fa. DuPont), 15 g Aceton und 2,00 g des Trithiocarbonates (IV) eingefüllt. Der Reaktor wurde dreimal entgast und dann unter Stickstoffatmosphäre die Polymerisation durchgeführt. Zur Initiierung wurde auf 75 °C hochgeheizt und unter Rühren 4 h polymerisiert. Dann wurde mit 0,12 g Vazo 67™ (Fa. DuPont) nachinitiiert. Die Polymerisation wurde nach 48 h abgebrochen, zur Isolierung auf RT abgekühlt.
Anschließend wurde das Polymer in einen 4 L Polymerisationsreaktor für konventionelle radikalische Polymerisationen umgefüllt und das Polymerisat mit 635 g 2-Ethylhexylacrylat, 40 g Acrylsäure, 100 g N-tert.-Butylacrylamid, 15 g Maleinsäureanhydrid, 10 g Ebecryl P36, 150 g Aceton sowie 300 g Siedegrenzenbenzin verdünnt.
Nach 20 Minuten Durchleiten von Stickstoffgas und zweimaligen Entgasen wurde der Reaktor unter Rühren auf 80 °C hochgeheizt. Bei einer Produkttemperatur von 60 °C werden 0,20 g Vazo 67™ (Fa. DuPont) hinzugegeben. Nach 2 h wurde mit 0,20 g Vazo 67™ nachinitiiert, nach 3 h mit 300 g Siedegrenzenbenzin 60/95 und 100 g Aceton verdünnt, nach 6 h mit 200 g Siedegrenzenbenzin 60/95 und 100 g Aceton verdünnt und mit 0.2 g Vazo 67™ nachinitiiert, und nach 24 h die Polymerisation abgebrochen.

Zur Isolierung wurde auf RT abgekühlt, das Blockcopolymer auf 40 % durch Aceton/Siedegrenzenbenzin (1:2) verdünnt und dann mit 20 Gewichtsanteilen Regalite R91™ (Fa. Hercules) bezogen auf den Polymeranteil abgemischt. Das Acrylatblockcopolymer wird in einem Vakuum/Trockenschrank vom Lösungsmittelgemisch befreit und anschließend aus der Schmelze über eine Breitschlitzdüse auf eine mit Saran geprimerten 23 µm dicken PET-Träger mit 50 g/m² Masseauftrag beschichtet. Die hergestellten Muster wurden mit 6 Durchläufen durch eine UV-Anlage der Fa. Eltosch, ausgestattet mit einem Quecksilber-Mitteldruckstrahler, und einer Bahngeschwindigkeit von 20 m/min bestrahlt. Anschließend wurde nach den Testmethoden TA, TB1 und TB2 ausgetestet.

### Beispiel 4:

Es wurde analog Beispiel 3 vorgegangen. Das Acrylatblockcopolymer wurde mit 30 Gewichtsanteilen Regalite R91™ (Fa. Hercules) bezogen auf den Polymeranteil abgemischt. Nach der Beschichtung aus der Schmelze wurde nach den Testmethoden TA, TB1 und TB2 ausgetestet.

### Beispiel 5:

In einem 1000 ml Polymerisationsreaktor, ausgestattet mit einem Heizbad, einem Rückflußkühler, einem Stickstoffeinleitungsrohr und einem Ankerrührer, wurden 400 g Acrylsäuretriacontanylester, 133 g Siedegrenzenbenzin 60/95, 0,12 g Vazo 67™ (Fa. DuPont), 15 g Aceton und 2,00 g des Trithiocarbonates (IV) eingefüllt. Der Reaktor wurde dreimal entgast und dann unter Stickstoffatmosphäre die Polymerisation durchgeführt. Zur Initiierung wurde auf 75 °C hochgeheizt und unter Rühren 4 h polymerisiert. Dann wurde mit 0,12 g Vazo 67™ (Fa. DuPont) nachinitiiert. Die Polymerisation wurde nach 48 h abgebrochen, zur Isolierung auf RT abgekühlt.
Anschließend wurde das Polymer in einen 4 L Polymerisationsreaktor für konventionelle radikalische Polymerisationen umgefüllt und das Polymerisat mit 635 g 2-Ethylhexylacrylat, 40 g Acrylsäure, 100 g N-tert.-Butylacrylamid, 15 g Maleinsäureanhydrid, 10 g Benzoinacrylat, 150 g Aceton sowie 300 g Siedegrenzenbenzin verdünnt.
Nach 20 Minuten Durchleiten von Stickstoffgas und zweimaligen Entgasen wurde der Reaktor unter Rühren auf 80 °C hochgeheizt. Bei einer Produkttemperatur von 60 °C werden 0,20 g Vazo 67™ (Fa. DuPont) hinzugegeben. Nach 2 h wurde mit 0,20 g Vazo 67™ nachinitiiert, nach 3 h mit 300 g Siedegrenzenbenzin 60/95 und 100 g Aceton verdünnt, nach 6 h mit 200 g Siedegrenzenbenzin 60/95 und 100 g Aceton verdünnt und mit 0.2 g Vazo 67™ nachinitiiert, und nach 24 h die Polymerisation abgebrochen.

Zur Isolierung wurde auf RT abgekühlt, das Blockcopolymer auf 40 % durch Aceton/Siedegrenzenbenzin (1:2) verdünnt und dann mit 30 Gewichtsanteilen Regalite R91™ (Fa. Hercules) bezogen auf den Polymeranteil abgemischt. Das Acrylatblockcopolymer wird in einem Vakuum/Trockenschrank vom Lösungsmittelgemisch befreit und anschließend aus der Schmelze über eine Breitschlitzdüse auf eine mit Saran geprimerten 23 µm dicken PET-Träger mit 50 g/m² Masseauftrag beschichtet. Die hergestellten Muster wurden mit 6 Durchläufen durch eine UV-Anlage der Fa. Eltosch, ausgestattet mit einem Quecksilber-Mitteldruckstrahler, und einer Bahngeschwindigkeit von 20 m/min bestrahlt. Anschließend wurde nach den Testmethoden TA, TB1 und TB2 ausgetestet.

### Beispiel 6:

In einem 1000 ml Polymerisationsreaktor, ausgestattet mit einem Heizbad, einem Rückflußkühler, einem Stickstoffeinleitungsrohr und einem Ankerrührer, wurden 400 g Acrylsäuretriacontanylester, 133 g Siedegrenzenbenzin 60/95, 0,12 g Vazo 67™ (Fa. DuPont), 15 g Aceton und 2,00 g des Trithiocarbonates (IV) eingefüllt. Der Reaktor wurde dreimal entgast und dann unter Stickstoffatmosphäre die Polymerisation durchgeführt. Zur Initiierung wurde auf 75 °C hochgeheizt und unter Rühren 4 h polymerisiert. Dann wurde mit 0,12 g Vazo 67™ (Fa. DuPont) nachinitiiert. Die Polymerisation wurde nach 48 h abgebrochen, zur Isolierung auf RT abgekühlt.
Anschließend wurde das Polymer in einen 4 L Polymerisationsreaktor für konventionelle radikalische Polymerisationen umgefüllt und das Polymerisat mit 300 g n-Butylacrylat, 300 g 2-Ethylhexylacrylat, 40 g Acrylsäure, 100 g Methylacrylat, 15 g Maleinsäureanhydrid, 85 g Ethylacrylat, 150 g Aceton sowie 300 g Siedegrenzenbenzin 60/95 verdünnt.
Nach 20 Minuten Durchleiten von Stickstoffgas und zweimaligen Entgasen wurde der Reaktor unter Rühren auf 80 °C hochgeheizt. Bei einer Produkttemperatur von 60 °C werden 0,20 g Vazo 67™ (Fa. DuPont) hinzugegeben. Nach 2 h wurde mit 0,20 g Vazo 67™ nachinitiiert, nach 3 h mit 300 g Siedegrenzenbenzin 60/95 und 100 g Aceton verdünnt, nach 6 h mit 200 g Siedegrenzenbenzin 60/95 und 100 g Aceton verdünnt und mit 0.2 g Vazo 67™ nachinitiiert, und nach 24 h die Polymerisation abgebrochen.

Zur Isolierung wurde auf RT abgekühlt, das Blockcopolymer auf 35 % durch Aceton/Siedegrenzenbenzin (1:2) verdünnt, mit 0,3 Gewichtsanteilen Aluminiumacetylacetonat bezogen auf das Polymer abgemischt, dann mit 20 Gewichtsanteilen Regalite R91™ (Fa. Hercules) bezogen auf den Polymeranteil abgemischt und anschließend über einen Streichbalken mit einem konventionellen Rakel auf einen mit Saran geprimerten 23 µm dicken PET-Träger beschichtet. Anschließend wurde für 10 Minuten bei 120 °C im Trockenschrank getrocknet. Der Masseauftrag auf dem Trägermaterial betrug anschließend 50 g/m². Anschließend wurde nach den Testmethoden TA, TB1 und TB2 ausgetestet.

### Beispiel 7:

In einem 4000 ml Polymerisationsreaktor, ausgestattet mit einem Heizbad, einem Rückflußkühler, einem Stickstoffeinleitungsrohr und einem Ankerrührer, wurden 850 g 2-Ethylhexylacrylat, 850 g n-Butylacrylat, 50 g Acrylsäure, 50 g N-tert.-Buylacrylamid, 133 g Siedegrenzenbenzin 60/95, 500 g Aceton und 10 g Trithiocarbonat (IV) eingefüllt. Der Reaktor wurde dreimal entgast und dann unter Stickstoffatmosphäre die Polymerisation durchgeführt. Zur Initiierung wurde auf 70 °C hochgeheizt und 0,80 g Vazo 67™ (Fa. DuPont) hinzugegeben. Nach 2 h Polymerisationszeit wurde mit 0,80 g Vazo 67™ (Fa. DuPont) nachinitiiert. Nach 5 und 10 Stunden wurde mit jeweils 600 g Aceton/Siedegrenzenbenzin (4:1) verdünnt. Nach 48 Stunden Reaktionszeit wurden 200 g Acrylsäuretriacontanylester und 133 g Siedegrenzenbenzin 60/95 hinzugegeben und mit 0.4 g Vazo 67™ (Fa. DuPont) nachinitiiert. Nach weiteren 12 h Reaktionszeit wurde wiederum mit 0.4 g Vazo 67™ (Fa. DuPont) nachinitiiert und nach 48 h Reaktionszeit wurde die Polymerisation abgebrochen und auf Raumtemperatur abgekühlt.
Das Blockcopolymer wurde auf 30 % Siedegrenzenbenzin verdünnt, mit 0,3 Gewichtsanteilen Aluminiumacetylacetonat bezogen auf das Polymer abgemischt und mit 15 Gewichtsanteilen Regalite R91™ (Fa. Hercules), bezogen auf den Polymeranteil, abgemischt und anschließend über einen Streichbalken mit einem konventionellen Rakel auf einen mit Saran geprimerten 23 µm dicken PET-Träger beschichtet. Anschließend wurde für 10 Minuten bei 120 °C im Trockenschrank getrocknet. Der Masseauftrag auf dem Trägermaterial betrug anschließend 50 g/m². Anschließend wurde nach den Testmethoden TA, TB1 und TB2 ausgetestet.

### Resultate

In der folgenden Tabelle sind die klebtechnischen Eigenschaften der in den Beispielen 1 bis 7 hergestellten Massen aufgelistet.

| Beispiel | SSZ RT /TA | KK auf PE / TB1 | KK auf PP /TB2 |
|---|---|---|---|
| 1 | 582 | 6.2 | 7.0 |
| 2 | 420 | 6.6 | 7.8 |
| 3 | 466 | 6.1 | 6.9 |
| 4 | 398 | 6.0 | 7.2 |
| 5 | 502 | 6.1 | 7.0 |
| 6 | 607 | 5.1 | 5.4 |
| 7 | 1254 | 5.2 | 6.2 |

| | | | |
|---|---|---|---|
| SSZ: Scherstandzeiten in min | | | |
| KK: Klebkraft in N/cm | | | |

Die Beispiele 1 und 2 belegen, daß sich mit den erfindungsgemäßen Acrylathaftklebemassen mit Regalite R91™ hohe Klebkräfte auf unpolaren Oberflächen realisieren lassen. Die Klebemassen wurden aus der Schmelze als Hotmelt aufgetragen und mit Elektronenstrahlen vernetzt. Die Beispiele 3 und 4 wurden ebenfalls aus der Schmelze aufgetragen, wurden aber mit UV-Licht vernetzt. Auch hier wurden mit 30 % Regalite R91™ etwas höhere Klebkräfte auf PE und PP erzielt. Beispiel 5 besitzt eine etwas andere Comonomerzusammensetzung, wurde aber ebenfalls mit 20 % Regalite R91™ abgemischt, aus der Schmelze beschichtet und mit UV-Licht vernetzt. Beispiel 6 wurde dagegen aus Lösung aufgetragen und mit einem Aluminiumchelat thermisch vernetzt. Auch hier wurden mit 20 % Regalite R91™ Klebkräfte von 6 N/cm auf PE und PP realisiert. Beispiel 7 besitzt einen relativ geringen Anteil aliphatischen Anteil und eine invers aufgebaute Blockstruktur P(B)-P(A)-P(B). Auch dieses Polymer wurde mit aus Lösung beschichtet und mit Aluminiumchelat thermisch vernetzt.

Alle dargestellten Haftklebemassen sind sehr klar und transparent, obwohl Regalite R91™ ein sehr unpolares Harz ist und üblicherweise nicht verträglich mit Polyacrylaten ist.

## Patentansprüche

1. Haftklebemasse auf Basis von Blockcopolymeren, wobei die Blockcopolymere mindestens eine Einheit aus drei aufeinanderfolgenden Polymerblöcken aufweisen, bei denen die drei aufeinanderfolgenden Polymerblöcke in abwechseinder Folge aus der Gruppe der Polymerblöcke P(A) und P(B) gewählt werden, **dadurch gekennzeichnet, daß**
- P(A) einen Homo- oder Copolymerblock repräsentiert, erhältlich aus einer Komponente A, welche aus zumindest einem Monomeren A1 besteht,
- das zumindest eine Monomer A1 ein acryliertes Makromonomer entsprechend der allgemeinen Formel
CH₂=C(R^{I})(COOR^{II}) (I)
darstellt, wobei R^{I} = H oder CH₃ und R^{II} ein aliphatischer linearer, verzweigter oder cyclischer, unsubstituierter oder substituierter, gesättigter oder ungesättigter Alkylrest mit mehr als 30 Kohlenstoffatomen ist, und wobei das mittlere Molekulargewicht M_{N} des zumindest einen Makromonomers zwischen 492 g/mol und 30.000 g/mol liegt,
- P(B) einen Homo- oder Copolymerblock repräsentiert, erhältlich aus einer Komponente B, welche aus zumindest einem Monomer B1 besteht, wobei der Polymerblock P(B) eine Erweichungstemperatur von - 80 °C bis + 20 °C aufweist,
- die Polymerblöcke P(A) nicht homogen mischbar mit den Polymerblöcken P(B) sind.

2. Haftklebemasse nach Anspruch 1, **dadurch gekennzeichnet, daß** als comonomer für die Komponente A zusätzlich zumindest eine Vinylverbindung mit funktionellen Gruppen eingesetzt wird.

3. Haftklebemasse nach zumindest einem der vorangehenden Ansprüche, **dadurch gekennzeichnet, daß**
die Komponente A sich wie folgt zusammensetzt:
- 50 bis 100 Gew.-% Makromonomere entsprechend Monomer A1,
- 0 bis 50 Gew.-% Vinylverbindungen mit einer Glasübergangstemperatur von +20 bis + 175°C.

4. Haftklebemasse nach zumindest einem der vorangehenden Ansprüche, **dadurch gekennzeichnet, dass** im Sinne des Comonomers für die komponente A1, Vinylaromaten, Methylmethacrylate, Cyclohexylmethacrylate, Isobornylmethacrylate gewählt werden.

5. Haftklebemasse nach zumindest einem der vorangehenden Ansprüche, **dadurch gekennzeichnet, daß**
im Sinne des Monomers A1 hydrierte Ethylen/Propylen-Makromonomere und/oder hydrierte Ethylen/Butylen-Makromonomere, welche eine Erweichungstemperatur von nicht über 0 °C besitzen und als Endgruppe eine Acrylat- oder Methacrylatfunktion tragen, eingesetzt werden.

6. Haftklebemasse nach zumindest einem der vorangehenden Ansprüche, **dadurch gekennzeichnet, daß**
die Komponente B sich zumindest teilweise aus den Monomeren zusammensetzt, welche aus den folgenden Gruppen gewählt werden:
(a) Acrylsäure- und Methacrylsäure-Derivate nach der allgemeinen Formel
CH₂ = CR^{III})(COOR^{IV}) (II)
wobei R^{III} = H oder CH₃ ist und R^{IV} eine lineare oder verzweigte aliphatische Alkylkette mit 2 bis 20, bevorzugt mit 4 bis 14, insbesondere mit 4 bis 9 Kohlenstoffatomen darstellt,
(b) Vinylverbindungen; insbesondere solche, welche eine oder mehrere funktionelle Gruppen aufweisen, die zur Vernetzung befähigt sind,
wobei sich die Komponente B insbesondere zusammensetzt aus 60 bis 100 Gew.-% Verbindungen aus der Gruppe (a) und 0 bis 40 Gew.-% Verbindungen aus der Gruppe (b).

7. Haftklebemasse nach zumindest einem der vorangehenden Ansprüche, **dadurch gekennzeichnet, daß**
zumindest eines der Monomere der Komponente B, bevorzugt im Sinne der Gruppe (b), derart gewählt wird, daß es eine oder mehrere funktionelle Gruppen aufweist, welche zu einer Vernetzungsreaktion für der Blockcopolymere genutzt werden können, besonders zu einer thermischen oder strahlenchemischen Vernetzung, ganz besonders zu einer Vernetzung, welche durch UV-Strahlen oder durch Bestrahlung mit Elektronenstrahlen hervorgerufen und/oder unterstützt wird.

8. Haftklebemasse nach zumindest einem der vorangehenden Ansprüche, **dadurch gekennzeichnet, daß**
die Komponente B derart gewählt wird, daß die Polymerblöcke P(B) in der Lage sind, eine Zwei-Phasen-Domänenstruktur mit den Copolymerblöcken P(A) auszubilden.

9. Haftklebemasse nach zumindest einem der vorangehenden Ansprüche, **dadurch gekennzeichnet, daß**
die Blockcopolymere ein mittleres Molekulargewicht (Zahlenmittel) zwischen 5.000 und 600.000 g/mol, insbesondere zwischen 80.000 und 450.000 g/mol aufweisen.

10. Haftklebemasse nach zumindest einem der vorangehenden Ansprüche, **dadurch gekennzeichnet, daß** der Anteil der Polymerblöcke P(B) zwischen 10 und 60 Gew.%, insbesondere zwischen 15 und 40 Gew.-% des gesamten Blockcopolymers liegt.

11. Haftklebemasse nach zumindest einem der vorangehenden Ansprüche, **dadurch gekennzeichnet, daß**
bis zu 50 Gew.%, insbesondere 20 bis 40 Gew.%, Harze, und/oder daß Additive, insbesondere Vernetzer, Alterungsschutzmittel, Lichtschutzmittel, Ozonschutzmittel, Fettsäuren, Weichmacher, Keimbildner, Blähmittel, Beschleuniger und/oder Füllmittel, zugesetzt sind.

12. Verwendung einer Haftklebemasse nach zumindest einem der vorangehenden Ansprüche für ein ein- oder doppelseitig mit der Haftklebemasse ausgerüstetes Klebeband, insbesondere für ein Klebeband für Verklebungen auf unpolaren Oberflächen, wobei die Haftklebemasse - bevorzugt aus der Schmelze - als ein- oder doppelseitiger Film auf einen Träger aufgetragen ist..

13. Verfahren zur Herstellung einer Haftklebemasse nach zumindest einem der vorangehenden Ansprüche, **gekennzeichnet durch** die Darstellung des Blockcopolymers **durch** eine Thioester- oder eine Trithiocarbonat-kontrollierte radikalische Polymerisation.

## Claims

1. Pressure sensitive adhesive based on block copolymers, said block copolymers having at least one unit composed of three successive polymer blocks, said three successive polymer blocks being chosen in alternation from the group of the polymer blocks P(A) and P(B), **characterized in that**
- P(A) represents a homopolymer or copolymer block obtainable from a component A which is composed of at least one monomer A1,
- said at least one monomer A1 is an acrylated macromonomer of general formula
CH₂=C(R^{I})(COOR^{II}) (I)
in which R^{I} = H or CH₃ and R^{II} is an aliphatic linear, branched or cyclic, unsubstituted or substituted, saturated or unsaturated, alkyl radical having more than 30 carbon atoms, and the average molecular weight Mₙ of said at least one macromonomer being between 492 g/mol and 30 000 g/mol,
- P(B) represents a homopolymer or copolymer block obtainable from a component B which is composed of at least one monomer B1, the polymer block P(B) having a softening temperature of from -80°C to +20°C, and
- the polymer blocks P(A) are not homogeneously miscible with the polymer blocks P(B).

2. Pressure sensitive adhesive according to Claim 1, **characterized in that**
at least one vinyl compound containing functional groups is additionally used as comonomer for component A.

3. Pressure sensitive adhesive according to at least one of the preceding claims, **characterized in that** component A has the following composition:
- from 50 to 100% by weight macromonomers corresponding to monomer A1,
- from 0 to 50% by weight vinyl compounds having a glass transition temperature of from +20 to +175°C.

4. Pressure sensitive adhesive according to at least one of the preceding claims, **characterized in that** for the comonomer for component A1, vinylaromatics, methyl methacrylates, cyclohexyl methacrylates, isobornyl methacrylates are chosen.

5. Pressure sensitive adhesive according to at least one of the preceding claims, **characterized in that** as monomer A1 use is made of hydrogenated ethylene/propylene macromonomers and/or hydrogenated ethylene/butylene macromonomers which possess a softening temperature of not more than 0°C and carry an acrylate or methacrylate function as end group.

6. Pressure sensitive adhesive according to at least one of the preceding claims, **characterized in that** component B is composed at least in part of the monomers which are chosen from the following groups:
(a) acrylic and methacrylic acid derivatives of the general formula
CH₂ = C(R^{III})(COOR^{IV}) (II)
in which R^{III} = H or CH₃ and R^{IV} represents a linear or branched aliphatic alkyl chain having from 2 to 20, preferably from 4 to 14, in particular from 4 to 9 carbon atoms,
(b) vinyl compounds, especially those which have one or more functional groups capable of crosslinking,
component B being composed in particular of from 60 to 100% by weight of compounds from group (a) and from 0 to 40% by weight of compounds from group (b).

7. Pressure sensitive adhesive according to at least one of the preceding claims, **characterized in that** at least one of the monomers of component B, preferably in group (b), is chosen such that it contains one or more functional groups which can be used for a crosslinking reaction of the block copolymer, especially for a thermal or radiation-chemical crosslinking, and, very particularly, for a crosslinking which is induced and/or assisted by UV radiation or by irradiation with electron beams.

8. Pressure sensitive adhesive according to at least one of the preceding claims, **characterized in that** component B is chosen such that the polymer blocks P(B) are capable of forming a two-phase domain structure with the copolymer blocks P(A).

9. Pressure sensitive adhesive according to at least one of the preceding claims, **characterized in that** the block copolymers have an average molecular weight (numerical average) of between 5 000 and 600 000 g/mol, in particular between 80 000 and 450 000 g/mol.

10. Pressure sensitive adhesive according to at least one of the preceding claims, **characterized in that** the fraction of the polymer blocks P(B) is between 10 and 60% by weight, in particular between 15 and 40% by weight, of the overall block copolymer.

11. Pressure sensitive adhesive according to at least one of the preceding claims, **characterized in that** up to 50% by weight, in particular from 20 to 40% by weight, of resins, and/or **in that** additives, especially crosslinkers, aging inhibitors, light stabilizers, ozone protectants, fatty acids, plasticizers, nucleators, expandants, accelerators and/or fillers, are added.

12. Use of a pressure sensitive adhesive according to at least one of the preceding claims for an adhesive tape provided on one or both sides with said pressure sensitive adhesive, especially for an adhesive tape for bonds to apolar surfaces, the pressure sensitive adhesive being applied, preferably from the melt, as a one-side or both-sides film to a backing.

13. Process for preparing a pressure sensitive adhesive according to at least one of the preceding claims, **characterized by** preparing the block copolymer by means of a thioester- or trithiocarbonate-controlled radical polymerization.

## Revendications

1. Masse autoadhésive à base de copolymères à blocs, les copolymères à blocs présentant au moins une unité formée de trois blocs polymères consécutifs, où les trois blocs polymères consécutifs sont choisis alternativement dans le groupe des blocs polymères P(A) et P(B), **caractérisée en ce que**
- P(A) représente un bloc homopolymère ou copolymère, pouvant être obtenu à partir d'un composant A, qui est constitué par au moins un monomère A1,
- au moins un monomère A1 représente un macromonomère acrylé correspondant à la formule générale
CH₂=C(R^{I})(COOR^{II}) (I)
où R^{I} = H ou CH₃ et R^{II} représente un radical alkyle aliphatique, linéaire, ramifié ou cyclique, non substitué ou substitué, saturé ou insaturé, comprenant plus de 30 atomes de carbone et où le poids moléculaire moyen M_{N} dudit au moins un macromonomère est situé entre 492 g/mole et 30 000 g/mole,
- P(B) représente un bloc homopolymère ou copolymère pouvant être obtenu à partir d'un composant B, qui est constitué par au moins un monomère B1, le bloc polymère P(B) présentant une température de ramollissement de -80°C à 20°C,
- les blocs polymères P(A) ne sont pas miscibles de manière homogène avec les blocs polymères P(B).

2. Masse autoadhésive selon la revendication 1, **caractérisée en ce qu'**on utilise comme comonomère pour le composant A en outre au moins un composé de vinyle avec des groupes fonctionnels.

3. Masse autoadhésive selon au moins l'une quelconque des revendications précédentes, **caractérisée en ce que** le composant A est constitué comme suit :
- 50 à 100% en poids de macromonomères correspondant au monomère A1,
- 0 à 50% en poids de composés de vinyle présentant une température de transition vitreuse de +20 à +175°C.

4. Masse autoadhésive selon au moins l'une quelconque des revendications précédentes, **caractérisée en ce qu'**on choisit dans le sens du comonomère pour le composant A1 des aromatiques de vinyle, des méthacrylates de méthyle, des méthacrylates de cyclohexyle, des méthacrylates d'isobornyle.

5. Masse autoadhésive selon au moins l'une quelconque des revendications précédentes, **caractérisée en ce que** qu'on utilise, dans le sens du monomère A1, des macromonomères d'éthylène/propylène hydrogénés et/ou des macromonomères d'éthylène/butylène hydrogénés, qui présentent une température de ramollissement qui n'est pas supérieure à 0°C et qui portent comme groupe terminal une fonction acrylate ou méthacrylate.

6. Masse autoadhésive selon au moins l'une quelconque des revendications précédentes, **caractérisée en ce que** le composant B est constitué au moins partiellement par les monomères, qui sont choisis parmi les groupes suivantes :
(a) les dérivés de l'acide acrylique et méthacrylique selon la formule générale
CH₂=C(R^{III})(COOR^{IV}) (II)
où R^{III} = H ou CH₃ et R^{IV} représente une chaîne alkyle aliphatique, linéaire ou ramifiée comprenant 2 à 20, de préférence 4 à 14, en particulier 4 à 9 atomes de carbone,
(b) composés de vinyle, en particulier ceux qui présentent un ou plusieurs groupes fonctionnels, qui sont aptes à une réticulation,
où le composant B est en particulier constitué par 60 à 100% en poids de composés du groupe (a) et 0 à 40% en poids de composés du groupe (b).

7. Masse autoadhésive selon au moins l'une quelconque des revendications précédentes, **caractérisée en ce qu'**au moins un des monomères du composant B, de préférence dans le sens du groupe (b), est choisi de telle manière qu'il présente un ou plusieurs groupes fonctionnels, qui peuvent être utilisés pour une réaction de réticulation pour des copolymères à blocs, en particulier pour une réticulation thermique ou chimique par des rayons, tout particulièrement pour une réticulation qui est provoquée et/ou soutenue par des rayons UV ou par une irradiation par des rayons électroniques.

8. Masse autoadhésive selon au moins l'une quelconque des revendications précédentes, **caractérisée en ce que** le composant B est choisi de telle manière que les blocs polymères P(B) sont en mesure de former une structure de domaines à deux phases avec les blocs copolymères P(A).

9. Masse autoadhésive selon au moins l'une quelconque des revendications précédentes, **caractérisée en ce que** les copolymères à blocs présentent un poids moléculaire moyen (moyenne numérique) entre 5000 et 600 000 g/mole, en particulier entre 80 000 et 450 000 g/mole.

10. Masse autoadhésive selon au moins l'une quelconque des revendications précédentes, **caractérisée en ce que** la proportion des blocs polymères P(B) est située entre 10 et 60% en poids, en particulier entre 15 et 40% en poids de la totalité du copolymère à blocs.

11. Masse autoadhésive selon au moins l'une quelconque des revendications précédentes, **caractérisée en ce que** jusqu'à 50% en poids, en particulier 20 à 40% en poids, de résines et/ou **en ce que** des additifs, en particulier des réticulants, des agents de protection contre le vieillissement, des agents de protection contre la lumière, des agents de protection contre l'ozone, des acides gras, des plastifiants, des agents de formation de germes, des agents gonflants, des accélérateurs et/ou des charges, sont ajoutés.

12. Utilisation d'une masse autoadhésive selon au moins l'une quelconque des revendications précédentes pour une bande adhésive apprêtée sur une ou les deux faces avec la masse autoadhésive, en particulier pour une bande adhésive destinée à des collages sur des surfaces non polaires, la masse autoadhésive étant appliquée - de préférence à partir de la masse fondue - sous forme d'un film simple ou double face sur un support.

13. Procédé pour la préparation d'une masse autoadhésive selon au moins l'une quelconque des revendications précédentes, **caractérisé par** la préparation du copolymère à blocs par une polymérisation radicalaire contrôlée par un thioester ou un trithiocarbonate.
